# EUROPEAN PATENT APPLICATION

(11) **EP 4 265 462 A1**
(43) Date of publication of application: **25.10.2023**
(21) Application number: 21906342.7
(22) Date of filing: 01.12.2021
(51) Int. Cl.: B60K 35/00, E02F 9/26, G01D 7/00, G01D 7/02, F01N 3/023

(54) **WORK MACHINE**

(30) Priority: 18.12.2020 JP 2020210348
(71) Applicant: Yanmar Holdings Co., Ltd., Osaka-shi, Osaka, 530-0013 (JP)
(72) Inventor: TAMURA, Kazuki, Chikugo-shi, Fukuoka 833-0055 (JP); KAWAGUCHI, Daisuke, Chikugo-shi, Fukuoka 833-0055 (JP); SUZUKI, Shogo, Osaka-shi, Osaka 530-0013 (JP)
(74) Representative: Novagraaf International SA
(86) International application number: PCT/JP2021/044075
(87) International publication number: WO 2022/130979

(57) **Abstract**

The present invention provides a work machine comprising an engine, an exhaust gas treatment device including a filter that catches particulate matter in exhaust gas discharged from the engine, and a display device that displays, when the filter is being regenerated through a rise in the temperature of the exhaust gas, the filter regeneration progress and a warning in association with the regeneration at the same time.

## Description

### TECHNICAL FIELD

The present invention relates to a work machine including an exhaust gas treatment device.

### BACKGROUND ART

Conventionally, exhaust gas treatment devices that purify exhaust gas by catching particulate matter in exhaust gas discharged from an engine by a filter have been known. When particulate matter accumulates on a filter and an accumulation amount thereof exceeds a set amount, a distribution resistance of the filter increases, so that particulate matter catching capacity is reduced and output of the engine is also reduced. Therefore, when the accumulation amount exceeds the set amount, filter regeneration in which the particulate matter accumulated on the filter is burned and is thus removed by changing engine diving conditions to increase temperature of the exhaust gas to restore the particulate matter catching capacity in the filter is performed. The accumulation amount of particulate matter on the filter and a progress of the filter regeneration are displayed, for example, on a display unit of a vehicle (see, for example, Patent Literature 1). Thus, an operator can recognize the progress of the filter regeneration by viewing the display unit.

### CITATION LIST

### Patent Literature

Patent Literature 1: Japanese Unexamined Patent Application Publication No. 2008-126968

### DISCLOSURE OF INVENTION

### PROBLEMS TO BE SOLVED BY THE INVENTION

Incidentally, during regeneration of a filter of an exhaust gas treatment device, high-temperature exhaust gas is discharged to surroundings, and therefore, it is necessary to notify an operator of danger and ensure safety of the surroundings. However, in Patent Literature 1, it is not discussed at all that it is urged to ensure safety of surroundings during filter regeneration.

The present invention has been devised to solve the above-described problems, and it is therefore an object of the present invention to provide a work machine that can make an operator recognize a progress of filter regeneration and, at the same time, urge the operator to ensure safety of surroundings during filter regeneration of an exhaust gas treatment device.

### MEANS FOR SOLVING THE PROBLEMS

A work machine according to an aspect of the present invention includes an engine, an exhaust gas treatment device including a filter that catches particulate matter in exhaust gas discharged from the engine, and a display device that simultaneously displays a progress of regeneration of the filter and a warning associated with the regeneration when the filter is regenerated by increase of temperature of the exhaust gas.

### EFFECT OF THE INVENTION

According to the above-described configuration, during filter regeneration of the exhaust gas treatment device, it is possible to make an operator recognize a progress of the filter regeneration and, at the same time, urge the operator to ensure the safety of the surroundings.

### BRIEF DESCRIPTION OF DRAWINGS

Fig. 1 is a side view illustrating a schematic configuration of a hydraulic excavator that is an example of a work machine according to an embodiment of the present invention.
Fig. 2 is an explanatory diagram schematically illustrating a configuration of an exhaust system of the hydraulic excavator.
Fig. 3 is a block diagram schematically illustrating a configuration of an exhaust gas treatment system of the hydraulic excavator.
Fig. 4 is a front view of a monitor device of the hydraulic excavator.
Fig. 5 is an explanatory view illustrating an example of a display screen of a display device of the monitor device.
Fig. 6 is an explanatory view illustrating an example of the display screen of the display device.
Fig. 7 is an explanatory view illustrating an example of the display screen of the display device.
Fig. 8 is an explanatory view illustrating an example of the display screen of the display device.
Fig. 9 is an explanatory view illustrating an example of the display screen of the display device.
Fig. 10 is an explanatory view illustrating an example of the display screen of the display device.
Fig. 11 is an explanatory view illustrating an example of the display screen of the display device.

### DESCRIPTION OF EMBODIMENTS

An embodiment of the present invention will be described as follows with reference to the accompanying drawings.

### 1. Work Machine

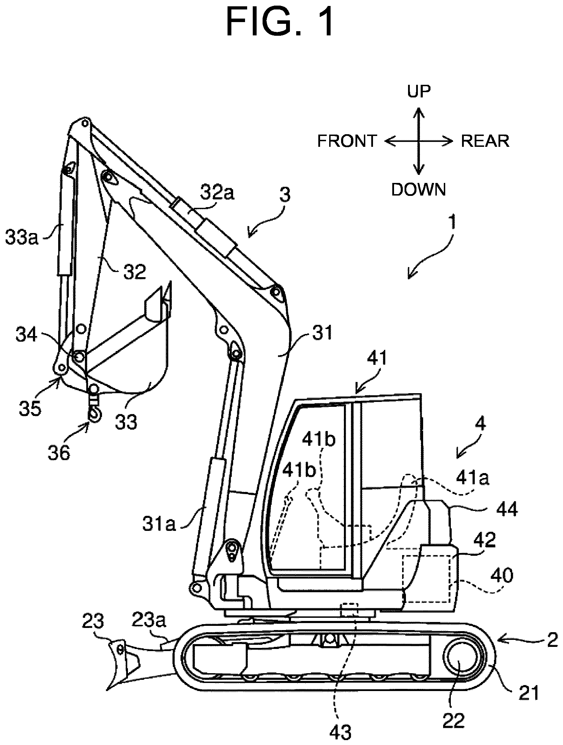

Fig. 1 is a side view illustrating a schematic configuration of a hydraulic excavator 1 that is an example of a work machine according to this embodiment. The hydraulic excavator 1 includes a lower traveling body 2, a work machine 3, and an upper rotating body 4.

Herein, in Fig. 1, directions are defined as follows. First, a direction in which the lower traveling body 2 travels straight ahead is defined as a front-rear direction, one side in the front-rear direction is defined as "front," and the other side in the front-rear direction is defined as "rear." In Fig. 1, as an example, a blade 23 side opposite to a traveling motor 22 is illustrated as "front." In addition, a lateral direction perpendicular to the front-rear direction is defined as a left-right direction. In this case, a left side and a right side as viewed from an operator (manipulator) seated on a steering seat 41a are defined as "left" and "right" respectively. Furthermore, a gravity direction perpendicular to the front-rear direction and the left-right direction is defined as an up-down direction, an upstream side of the gravity direction are defined as "up," and a downstream side thereof is defined as "down."

The lower traveling body 2 receives power from the engine 40 and is thus driven to cause the hydraulic excavator 1 to travel. The lower traveling body 2 includes a pair of left and right crawlers 21 and a pair of left and right traveling motors 22. Each of the traveling motors 22 is a hydraulic motor. Each of the left and right traveling motors 22 drives a corresponding one of the left and right crawlers 21, thereby moving the hydraulic excavator 1 forward and backward. A blade 23 used for performing a ground leveling work and a blade cylinder 23a are provided on the lower traveling body 2. The blade cylinder 23a is a hydraulic cylinder that turns the blade 23 in the up-down direction.

The work machine 3 receives power from the engine 40 and is thus driven to perform an excavation work to dig out earth and sand or the like. The work machine 3 includes a boom 31, an arm 32, and a bucket 33. The boom 31, the arm 32, and the bucket 33 are independently driven, thereby performing an excavation work.

The boom 31 is turned by a boom cylinder 31a. The boom cylinder 31a is configured such that a base end portion thereof is supported by a front portion of the upper rotating body 4, and can move freely extendable and contractable. The arm 32 is turned by an arm cylinder 32a. The arm cylinder 32a is configured such that a base end portion thereof is supported by a tip end portion of the boom 31, and can move freely extendable and contractable. The bucket 33 is turned by a bucket cylinder 33a. A base end portion of the bucket cylinder 33a is supported by a tip end portion of the arm 32 and the bucket cylinder 33a can move freely extendable and contractable. Each of the boom cylinder 31a, the arm cylinder 32a, and the bucket cylinder 33a is configured of a hydraulic cylinder.

The bucket 33 is a container-shaped member provided at a tip end of the work machine 3 and includes claws used for performing an excavation work. The bucket 33 is turnably attached to a tip end of the arm 32 via a pin 34. Furthermore, the bucket 33 is connected to the bucket cylinder 33a via a link mechanism 35.

A hook 36 is attached to a tip end portion of the arm 32. The hook 36 is a hook-shaped member used for performing a crane operation and is turnably provided on the link mechanism 35. Herein, the term "crane work" refers to a hanging work in which an object that is a target to be hung is hung to be lifted up and down. The hook 36 is turnably supported with a shaft of the link mechanism 35 as a turning fulcrum, and an attitude thereof can be changed between an extended state (see Fig. 1) in which the hook 36 protrudes from the bucket 33 and a retracted state (not illustrated) in which the hook 36 retracts to a bucket 33 side. For example, when an excavation work by the bucket 33 is performed, the hook 36 is put in the retracted state. On the other hand, when a crane work by the hook 36 is performed, the hook 36 is put in the extended state.

The upper rotating body 4 is configured to be rotatable relative to the lower traveling body 2 via a slewing bearing (not illustrated). A steering unit 41, a rotating table 42, a rotating motor 43, an engine room 44, or the like are arranged in the upper rotating body 4. The upper rotating body 4 is driven by the rotating motor 43 that is a hydraulic motor and thus is rotated via the slewing bearing. A plurality of hydraulic pumps (not illustrated), as well as the engine 40 that provides power to various portions, are arranged in a rear portion of the upper rotating body 4.

Each of the hydraulic pumps supplies hydraulic oil (pressure oil) to the hydraulic motors (for example, the left and right traveling motors 22 and the rotating motor 43) and the hydraulic cylinders (for example, the blade cylinder 23a, the boom cylinder 31a, the arm cylinder 32a, the bucket cylinder 33a). The hydraulic motors and the hydraulic cylinders to which hydraulic oil is supplied from any hydraulic pump to be driven are collectively called hydraulic actuator.

The steering seat 41a is arranged in the steering unit 41 on which an operator rides. An operation unit 41b is arranged around the steering seat 41a (specifically, in front and on left and right thereof).

The operation unit 41b includes an operation lever, switches, buttons, or the like used for driving the hydraulic actuators. The operator sits on the steering seat 41a and operates the operation unit 41b, so that the hydraulic actuators are driven. Thus, traveling of the lower traveling body 2, a ground leveling work by the blade 23, an excavation work and a crane work by the work machine 3, rotation of the upper rotating body 4, or the like can be performed.

The operation unit 41b includes a cutoff lever. The cutoff lever is provided in vicinity of the steering seat 41a so as to turn up and down. When the operator presses down the cutoff lever, a cutoff switch (not illustrated) is turned on, so that the operation unit 41b is put in a state (enabled state) where the operation unit 41b can be operated to drive a predetermined hydraulic actuator. On the other hand, when the operator pulls up the cutoff lever, the cutoff switch is turned off, so that the operation unit 41b is put in a state (disabled state) where, even when the operator operates the operation unit 41b, the hydraulic actuator cannot be driven. When the operator gets off the steering unit 41, the operator pulls up the cutoff lever to disable diving of the hydraulic actuator and then leaves the steering seat 41a.

### 2. Configuration of Exhaust System

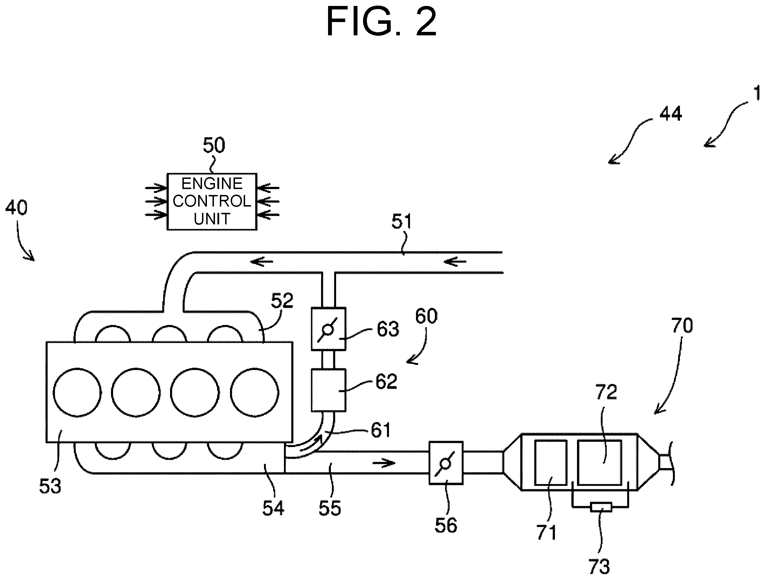

Fig. 2 is an explanatory diagram schematically illustrating a configuration of an exhaust system of the hydraulic excavator 1. The engine 40 described above is, for example, a diesel engine and includes an intake pipe 51. The intake pipe 51 sucks gas from outside and supplies the gas to an intake manifold 52. The intake manifold 52 divides the gas supplied from the intake pipe 51 into a number corresponding to a number of cylinders (gas columns) (that is, for example, four in Fig. 2) and supplies the divided gas to the cylinder head 53.

A plurality of cylinders and an injector are provided in the cylinder head 53. The injector is a fuel injection device that injects fuel into a combustion chamber of each cylinder at a predetermined timing. Fuel injection by the injector is controlled by an engine control unit 50 that is also referred to as an engine control unit (ECU).

Gases (exhaust gases after combustion) generated in the plurality of combustion chambers in the cylinder head 53 are once put together in the exhaust manifold 54. A portion of the gas discharged from an exhaust manifold 54 is sent to an exhaust gas recirculation (EGR) device 60. The EGR device 60 is an exhaust gas recirculation device that returns a portion of the gas to the intake pipe 51 and includes an EGR pipe 61, an EGR cooler 62, and an EGR valve 63.

The EGR pipe 61 communicates with the exhaust manifold 54. The EGR cooler 62 cools exhaust gas supplied from the exhaust manifold 54 via the EGR pipe 61. An amount of the exhaust gas supplied from the EGR cooler 62 to the intake pipe 51 is adjusted by the EGR valve 63. The exhaust gas is mixed with gas that is sucked into the intake manifold 52 via the intake pipe 51 by the EGR device 60. Thus, an amount of oxygen in the gas that is sucked is reduced, so that combustion temperature can be lowered. As a result, generation of nitrogen oxides that is called NOx can be reduced to comply with exhaust gas regulations (emission control).

Rest of the gas, that is, gas discharged from the cylinder head 53 through the exhaust manifold 54, is sent to an exhaust gas treatment device 70 via the exhaust pipe 55. An amount of the gas that is sent to the exhaust gas treatment device 70 is adjusted by an exhaust valve 56.

The exhaust gas treatment device 70 purifies the exhaust gas supplied through the exhaust pipe 55 and discharges the purified gas. Specifically, the exhaust gas treatment device 70 includes an oxidation catalyst 71, a filter 72, and a differential pressure sensor 73. The oxidation catalyst 71 is a catalyst used for oxidizing (burning) unburned fuel, carbon monoxide, nitrogen monoxide, or the like contained in exhaust gas, and is composed of platinum or the like. The filter 72 is configured, for example, as a wall-flow type filter and catches particulate matter contained in the exhaust gas treated by oxidation catalyst 71. That is, the hydraulic excavator 1 as a work machine in this embodiment includes the engine 40 and the exhaust gas treatment device 70 including the filter 72 that catches the particulate matter in exhaust gas discharged from the engine 40.

The differential pressure sensor 73 is a sensor that detects a difference between a pressure upstream of the filter 72 and a pressure downstream thereof, that is, a differential pressure, in the exhaust gas treatment device 70. Information on the differential pressure detected by the differential pressure sensor 73 is input to the engine control unit 50. A relationship between the differential pressure and an accumulation amount of particulate matter is known in advance through experiments or the like and is stored in a form of a map or a table in a storage unit (not illustrated) of the engine control unit 50. Therefore, the engine control unit 50 can easily determine the accumulation amount of particulate matter corresponding to the differential pressure detected by the differential pressure sensor 73 from the map or the like.

When the amount (accumulation amount) of particulate matter accumulated on the filter 72 exceeds a preset value (set amount), the particulate matter catching capacity on the filter 72 reduces and output of the engine 40 also reduces, as described above. Therefore, when the accumulation amount of particulate matter on the filter 72 exceeds the set amount, the engine control unit 50 changes diving conditions of the engine 40 to increase temperature of the exhaust gas. Thus, the particulate matter accumulated on the filter 72 is burnt and thus removed. That is, the filter 72 is regenerated.

Herein, as regeneration of the filter 72, there are automatic regeneration and manual regeneration. Automatic regeneration is a mode in which filter regeneration is automatically performed during a work with the hydraulic excavator 1 at regular intervals. In automatic regeneration, filter regeneration is performed by increasing temperature of exhaust gas, for example, in a range of less than 600 °C (for example, 250 °C to 500 °C). In contrast, manual regeneration is a mode in which the operator manually instructs regeneration of the filter 72 and filter regeneration is performed based on the instruction. In manual regeneration, filter regeneration is performed by increasing temperature of exhaust gas, for example, in a range of 600 °C or more to regenerate the filter 72 more powerfully than in automatic regeneration. A manual instruction for filter regeneration by the operator is made by an operation of the operation device 90 that will be described below.

### 3. Configuration of Exhaust Gas Treatment System

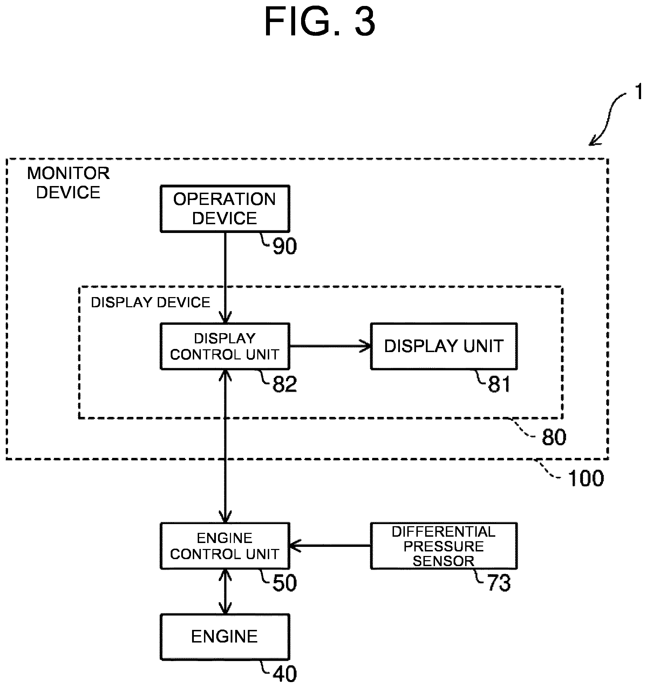

Fig. 3 is a block diagram schematically illustrating a configuration of an exhaust gas treatment system of the hydraulic excavator 1 of this embodiment. The hydraulic excavator 1 further includes, in addition to the engine 40, the engine control unit 50, and the exhaust gas treatment device 70 described above, a display device 80 and an operation device 90. In this embodiment, the display device 80 and the operation device 90 are integrally provided to form one monitor device 100, but the display device 80 and the operation device 90 may be provided separately from each other.

The display device 80 includes a display unit 81 and a display control unit 82. The display unit 81 is configured of, for example, a liquid crystal display device and displays various types of information. The display control unit 82 is configured of, for example, a central processing unit (CPU) and controls display of various types of information on the display unit 81.

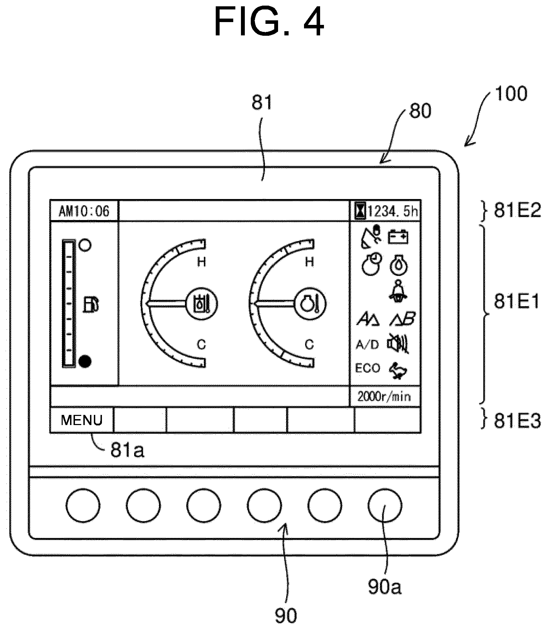

Fig. 4 is a front view of a monitor device 100. Note that, herein, when the operator observes the display unit 81 of the monitor device 100 from the front, a left side, a right side, a top side, and a bottom side as viewed from the operator are defined as "left," "right," "top," and "bottom," respectively. A display screen of the display unit 81 has a first display area 81E1, a second display area 81E2, and a third display area 81E3. Note that the display screen illustrated in Fig. 4 is also referred to as a home screen because the display screen is a starting point for various operations.

The first display area 81E1 is located in center of the display screen in the up-down direction. In the first display area 81E1, a fuel gauge, a water temperature gauge, an oil temperature gauge, and various warning lights are displayed from left to right. Note that the hydraulic excavator 1 is provided with various sensors, such as a fuel sensor, a water temperature sensor, an oil temperature sensor, or the like, and a remaining fuel level, water temperature, and lubricating oil temperature are displayed based on detection results thereof. The hydraulic excavator 1 is also provided with an abnormality detection sensor, such as a seatbelt wearing sensor or the like. When some kind of abnormality is detected by the abnormality detection sensor, a corresponding warning light is turned on and is displayed on the display screen, based on an abnormality detection signal output from the abnormality detection sensor. The engine speed is displayed below the display area for a plurality of warning lights. Otherwise, in the first display area 81E1, an icon indicating a currently operating function may be displayed.

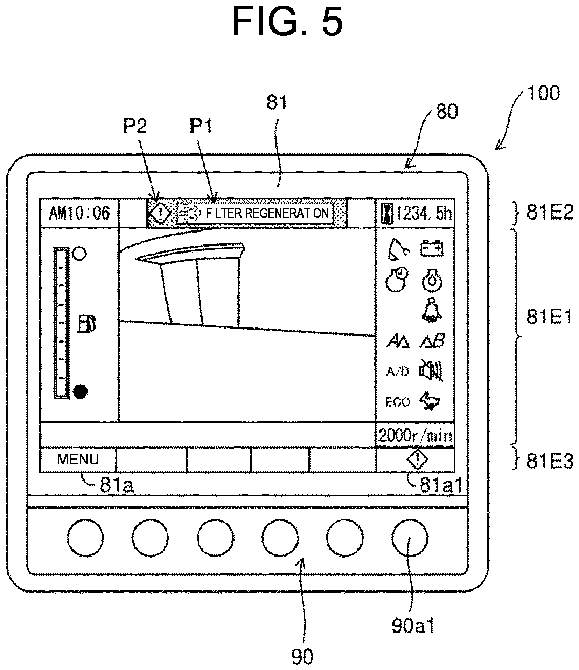

The hydraulic excavator 1 includes a camera (not illustrated) used for monitoring surroundings. In this configuration, it is also possible to display an image (camera image) captured by the camera, instead of the water temperature gauge and the oil temperature gauge in the first display area 81E1 (see Fig. 5). Selection of whether to display the camera image or the water temperature gauge or the like in the first display area 81E1 can be made by the operator by operating the operation device 90.

The second display area 81E2 is located in an upper portion of the screen relative to the first display area 81E1. In the second display area 81E2, for example, a current time, a cumulative operation time of the hydraulic excavator 1 since purchase thereof (1234.5 hours in an example of Fig. 5), or the like is displayed.

The third area 81E3 is located in a lower portion of the screen relative to the first display area 81E1. In the third display area 81E3, for example, items 81a (only "MENU" is illustrated in Fig. 5 for convenience) that can be selected by the operator via the operation device 90. Note that the item 81a may be displayed in text (characters) indicating a content of the item and may be displayed as an icon indicating the content.

The operation device 90 is an input unit that receives various instruction inputs made by the operator and is configured of an input device, such as a switch, a button, a jog dial, a touch panel, or the like. A control signal corresponding to an instruction received by the operation device 90 is input to the display control unit 82 of the display device 80.

In this embodiment, the operation device 90 is located in the lower portion of the display screen of the display unit 81. The operation device 90 is configured of, for example, an operation button 90a. In the example of Fig. 5, six operation buttons 90a are provided such that each of the operation buttons 90a corresponds to a corresponding one of the six selectable items 81a that are displayed in the third area 81E3 on the display screen of the display unit 81 and is located in a position below the corresponding one of the six selective items 81a. Note that, each of a number of the selectable items 81a and a number of operation buttons 90a displayed on the display unit 81 is not limited to six as described above.

The operator can press the operation button 90a located blow any one of the items 81a, thereby selecting the item 81a. When any one of the operation buttons 90a is pressed, a control signal indicating that the operation button 90a is pressed is output from the operation device 90 to the display control unit 82. Based on the control signal, the display control unit 82 can cause a display screen corresponding to the item 81a selected by pressing the operation button 90a to be displayed on the display unit 81. The display control unit 82 can also output the control signal as it is to the engine control unit 50. Thus, the engine control unit 50 can change the driving conditions of the engine 40, for example, to regenerate the filter 72 of the exhaust gas treatment device 70.

### 4. Display Screen During Filter Regeneration

Next, the display screen of the display device 80 when the filter 72 of the exhaust gas treatment device 70 is regenerated will be described with reference to Fig. 5 to Fig. 11. Fig. 5 to Fig. 11 are explanatory views each illustrating an example of the display screen of the display device 80. Note that, as an example, herein, the display screen when a work with the hydraulic excavator 1 is stopped and filter regeneration is performed based on a manual operation of the operation device 90 by the operator will be described as an example.

When information on the differential pressure detected by the differential pressure sensor 73 of the exhaust gas treatment device 70 is input to the engine control unit 50 and then the engine control unit 50 determines that the accumulation amount of particulate matter on the filter 72 exceeds the set amount, the engine control unit 50 outputs, to the display control unit 82, a regeneration request signal indicating that regeneration of the filter 72 of the exhaust gas treatment device 70 is required. Upon receiving the regeneration request signal, the display control unit 82 displays, in the second display area 81E2 of the display unit 81, regeneration request information P1 indicating that regeneration of the filter 72 is required and an icon P2 (a warning mark) that calls attention, as illustrated in Fig. 5. The display control unit 82 displays an icon (mark of warning) that call attention as the selectable item 81a1 in the third display area 81E3.

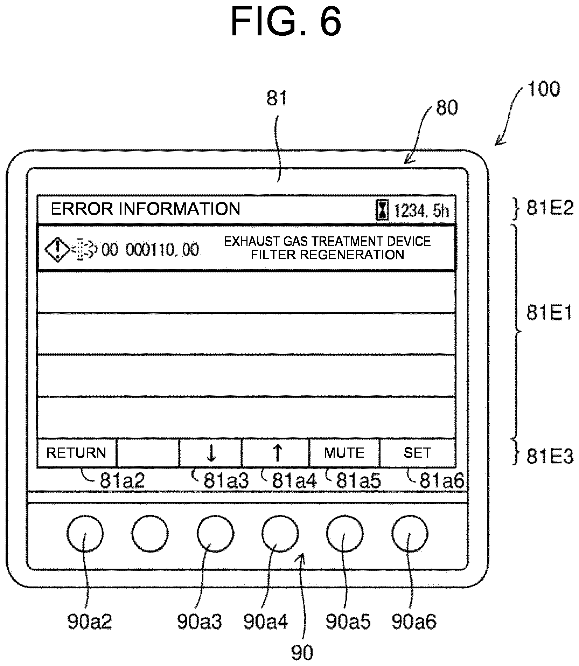

When the operator presses the operation button 90a1 located below the displayed item 81a1, the display control unit 82 displays error information on the display screen of the display unit 81, as illustrated in Fig. 6. The error information includes an icon (warning mark) indicating an error, an error code, text information indicating a content (herein, that filter regeneration is required) of the error code, or the like. When there are a plurality of error information, each error information is displayed in order from newest one from the upper portion to the lower portion of the display screen of the display unit 81.

In addition, the display control unit 82 displays items 81a2 to 81a6 of "RETURN," a "down arrow," an "up arrow," "MUTE," and "SET" side by side in the third display area 81E3 of the display unit 81. When the operator presses the operation button 90a2 located below the item 81a2 of "RETURN," the display control unit 92 switches the display screen of the display unit 81 to the screen illustrated in Fig. 5. The operator can move a selection area (a thick frame portion in Fig. 6) of the displayed error information down by pressing or holding down the operation button 90a3 located below the item 81a3 of the "down arrow" once each time. On the other hand, the operator can move the selection area up by pressing or holding down the operation button 90a4 located below the item 81a4 of the "up arrow" once each time. The operator can stop buzzer sound made by a buzzer (not illustrated) when error information is generated (when the regeneration request signal is generated) by pressing the operation button 90a5 located below the item 81a5 of "MUTE."

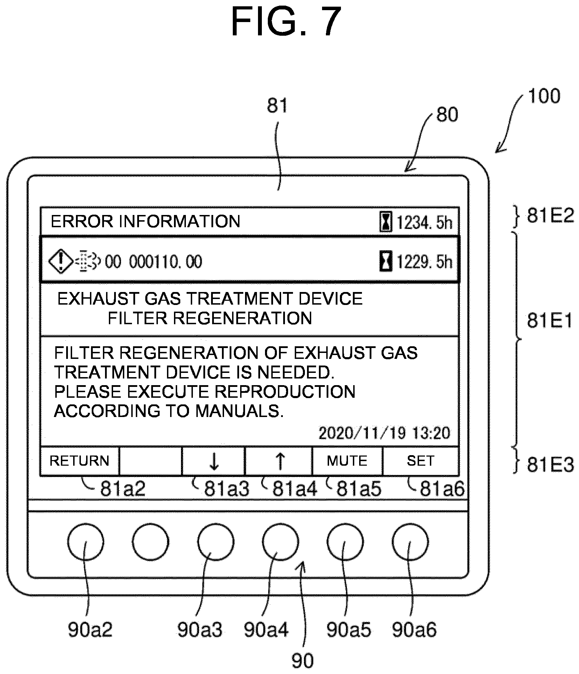

When the operator selects predetermined error information and presses the operation button 90a6 located below the item 81a6 of "SET," details of the selected error information are displayed on the display unit 81, as illustrated in Fig. 7. In the display screen in Fig. 7, a content of the error code and how to deal with an error that occurred are displayed. Note that, on the display screen illustrated in Fig. 7, "1229.5h" indicates that the error information was generated after 1229.5 hours had elapsed since purchase of the hydraulic excavator 1. Since the current cumulative operation time is 1234.5 hours, in an example of Fig. 7, it is indicated that five hours have elapsed since the error information was generated.

When the operator confirms the details of the error information and presses again the operation button 90a6 located below the item 81a6 of "SET" on the display screen, a control signal indicating that the operation button 90a6 has been pressed is output from the operation device 90 to the engine control unit 50 via the display control unit 82. Based on the control signal, the engine control unit 50 changes the driving conditions of the engine 40 for filter regeneration and increases the temperature of the exhaust gas. That is, the operation button 90a6 functions as a regeneration instruction operation unit that is operated by the operator to receive a regeneration instruction for the filter 72. Note that the regeneration instruction operation unit is not limited to the operation button 90a6 but may be an operation button or a switch in another position.

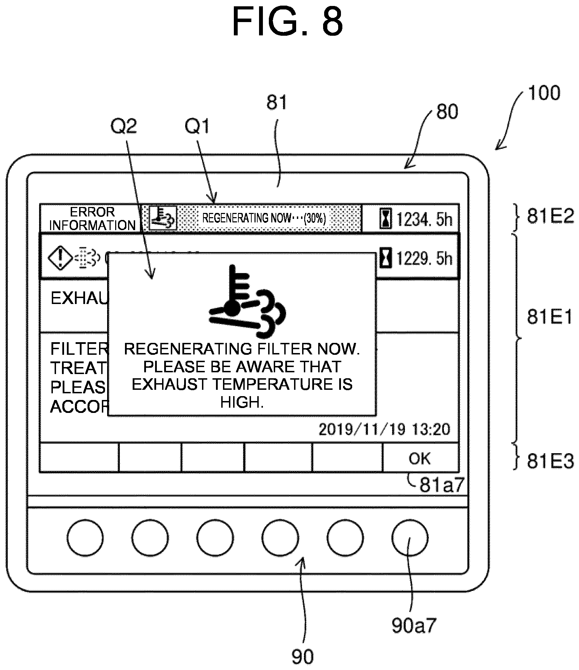

When increasing the temperature of the exhaust gas is started and thus regeneration of the filter 72 is started based on a pressing operation of the operation button 90a6 by the operator, as illustrated in Fig. 8, the display control unit 82 simultaneously displays, on the display screen of the display unit 81, information Q1 indicating a progress of filter regeneration and information Q2 indicating a warning associated with the filter regeneration. In an example of Fig. 8, it is displayed as the information Q1 in the second display area 81E2 that the regeneration of the filter 72 is 30% complete. Moreover, it is displayed as the information Q2 in the first display area 81E1 that the filter 72 is being regenerated and that the temperature of the exhaust gas is high and attention is required. The information Q2 related to a warning is superimposed on the display screen of display unit 81 illustrated in Fig. 7 (pop-up display). Note that, strictly speaking, the regeneration of the filter 72 is initiated based on the pressing operation of the operation button 90a6 after the operator pulls up the cutoff lever to put the hydraulic actuator in a state where the hydraulic actuator cannot be driven (hydraulic lock state).

Note that the progress of the filter regeneration may be estimated based on the accumulation amount of particulate matter corresponding to an output of the differential pressure sensor 73 during filter regeneration, and may be estimated based on a time required for regeneration of the filter 72 from start to completion. For example, when an average time from a start of regeneration of the filter 72 to a completion thereof is estimated to be about 30 minutes, the progress of the filter regeneration may be estimated to be 30% at a time point where ten minutes have elapsed since the start of regeneration of the filter 72.

On the display screen of the display unit 81 illustrated in Fig. 8, the item 81a7 of "OK" is selectably displayed in the third display area 81E3. When the operator presses the operation button 90a7 located below the item 81a7 of "OK," the information Q2 related to a warning is deleted. That is, the operation button 90a7 functions as a deletion instruction operation unit that is operated by the operator to receive a deletion instruction to delete display of a warning. By pressing the operation button 90a7, the display screen of the display unit 81 returns to the home screen with the information Q1 still displayed in the second display area 81E2. Note that the deletion instruction operation unit is not limited to the operation button 90a7 but may be an operation button or a switch in another position.

Note that, when the display control unit 82 selectably displays the item of "RETURN," instead of the item 81a7 of "OK," in the third display area 81E3 and then the operator presses the operation button 90a located below the item of "RETURN," control of returning to the home screen with the information Q 1 displayed in the second display area 81E2 may be performed. In a configuration in which a jog dial is provided as the operation device 90, the display control unit 82 may be configured to perform control of returning to the home screen when the operator presses the jog dial.

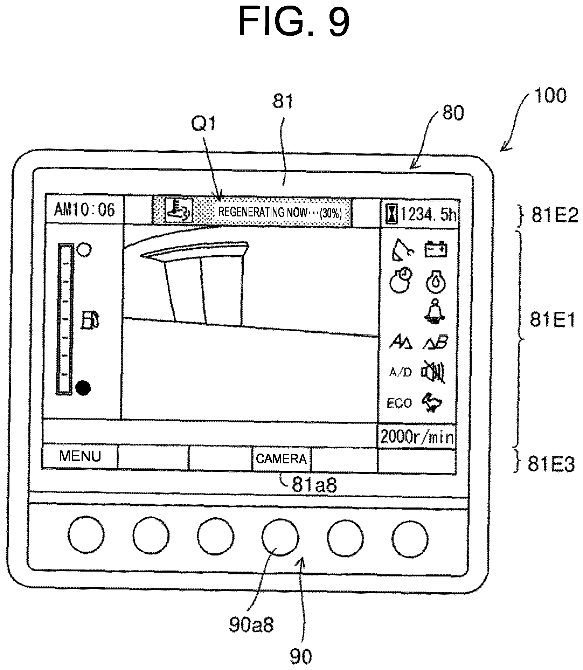

Fig. 9 illustrates the home screen with information Q1 displayed on the display unit 81. Note that, on the home screen illustrated in Fig. 9, the camera image is displayed, instead of the water temperature gauge and the oil temperature gauge in the first display area 81E1. This display of the camera image is performed by the operator by pressing the operation button 90a8 located below the item 81a8 of "CAMERA" displayed in the third display area 81e3 to instruct switching a display image. When the operator presses the operation button 90a8 again, the display control unit 82 switches the camera image displayed in the first display area 81E1 to a display of the water temperature gauge or the like.

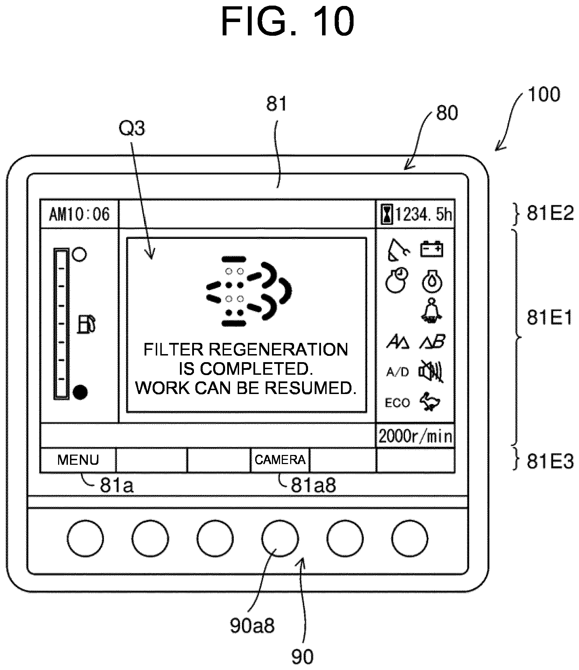

When the progress of the filter regeneration reaches 100% and the filter regeneration is completed, the display control unit 82 causes information Q3 indicating that the regeneration of the filter 72 is completed to pop up and be displayed in the first display area 81E1, while deleting display indicating the progress of regeneration from the second display area 81E2, as illustrated in Fig. 10. Upon completion of the filter regeneration, the operator can pull down the cutoff lever and operate the operation unit 41b (see Fig. 1) to cause the hydraulic excavator 1 to perform a normal work.

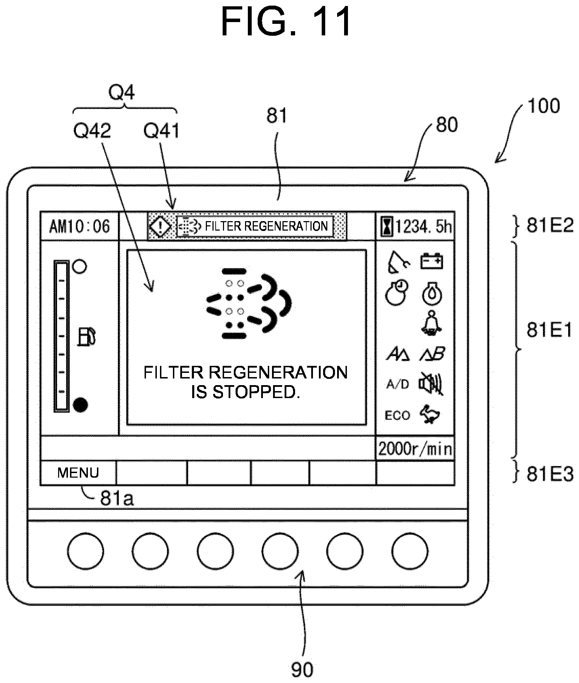

On the other hand, when a driving operation of the hydraulic excavator 1 is performed during filter regeneration, the engine control unit 50 interrupts increasing the temperature of the exhaust gas by the engine 40, thereby interrupting the filter regeneration. Note that the driving operation of the hydraulic excavator 1 includes operations, such as, for example, moving an accelerator volume of the steering unit 41 (see Fig. 1), pulling down the cutoff lever, or the like. The filter regeneration is interrupted by control of the engine control unit 50 also when an abnormality occurs in a filter regeneration operation, including, for example, a case where an abnormality in the exhaust gas treatment device 70 occurs. When the filter regeneration is interrupted, interruption information Q4 related to the interruption of the regeneration is displayed on the display screen of the display unit 81 by control of the display control unit 92, as illustrated in Fig. 11.

The interruption information Q4 includes abnormality information Q41 and notification information Q42. The abnormality information Q41 is information indicating an abnormality in filter regeneration and is configured to include, for example, characters, a mark, or the like. The abnormality information Q41 is displayed, for example, in the second display area 81E2, that is, a display area indicating the progress of the filter regeneration.

The notification information Q42 is information indicating that the regeneration has been interrupted and is configured to include, for example, characters, a mark, or the like. The notification information Q42 is displayed, for example, in the first display area 81E1, that is, a display area for a warning associated with the filter regeneration. Note that the display control unit 82 may be configured to display the abnormality information Q41 in the first display area 81E1 and the notification information Q42 in the second display area 81E2.

Display control of the display unit 81 executed when filter regeneration is performed based on a manual operation of the operation device 90 by the operator has been described above but, even when the engine control unit 50 automatically performs filter regeneration, based on an output of the differential pressure sensor 73, similar display control of the display unit 81 to that in this embodiment can be performed. For example, when filter regeneration is automatically performed, the display control unit 82 can simultaneously display a progress of the filter regeneration and a warning on the display unit 81. However, when filter regeneration is automatically performed, the hydraulic excavator 1 is at work (because it is assumed that a work is being performed with the camera image displayed in the center of the screen), and therefore, a display time of the warning that pops up to be displayed in the center of the screen is preferably short, that is, for example, a few seconds.

As described above, the hydraulic excavator 1 as a work machine of this embodiment includes the display device 80 that simultaneously displays the progress (information Q1) of regeneration of the filter 72 (of the exhaust gas treatment device 70) and a warning (information Q2) associated with the regeneration when the filter 72 is regenerated by increasing the temperature of the exhaust gas (by the engine 40) (see Fig. 8). In this configuration, during regeneration of the filter of the exhaust gas treatment device 70, it is possible to make the operator recognize a progress of the filter regeneration and, at the same time, to notify the operator of danger by displaying a warning to urge the operator to ensure safety in surroundings where exhaust gas is discharged. Thus, the operator can ensure the safety of the surroundings during the filter regeneration.

The display device 80 displays the progress and the warning also when the filter 72 is regenerated in accordance with an operation of the operation button 90a6 (see Fig. 7) as the regeneration instruction operation unit.

When the operator manually operates the operation button 90a6 to instruct regeneration of the filter 72 and the filter 72 is regenerated in response to the instruction, the filter 72 is regenerated more powerfully, and therefore, the temperature of the exhaust gas is further increased by the engine 40 and becomes higher than that when the filter 72 is automatically regenerated. In this case, it is necessary to more reliably ensure the safety of the surroundings where the exhaust gas is discharged. Therefore, the configuration of this embodiment in which the display device 80 calls attention of the operator by displaying the progress of regeneration and the warning is effective particularly when filter regeneration is performed based on a manual operation of the operation button 90a6 by the operator.

The display device 80 deletes display of the warning when the operation button 90a7 as the deletion instruction operation unit is operated (see Fig. 8 and Fig. 9).

After understanding the warning (information Q2) displayed on the display device 80 (display unit 81), the operator manually operates the operation button 90a7 to instruct deletion of the display of the warning, and thus, cause information other than the warning (for example, the camera image in Fig. 9) to be displayed on the display screen of the display device 80 to confirm the information even during filter regeneration.

When the filter 72 is regenerated, the display device 80 displays the warning and, at the same time, displays the item 81a7 of "OK" as additional information (see

Fig. 8). The additional information (item 81a7) is information indicating that the display of the warning can be deleted by operating the operation button 90a7 as the deletion instruction operation unit. In this case, at any time while the warning is displayed on the display device 80, the operator can operate the operation button 90a7, based on display of the item 81a7 of "OK" to instruct deletion of display of the warning.

As illustrated in Fig. 8, in this embodiment, the first display area 81E1 in which the warning (information Q2) is displayed and the second display area 81E2 in which the progress of the regeneration (information Q1) is displayed are located out of alignment with each other on the display screen of the display device 80. In this configuration, the progress of the regeneration and the warning can be displayed side by side on the display screen of the display device 80, allowing the operator to view them at the same time.

Specifically, the second display area 81E2 is located above the first display area 81E1 on the display screen of the display device 80. In this case, the second display area 81E2 can be positioned in the upper portion of the display screen. In a display device used in an ordinary work machine, a display area located in an upper portion of a display screen is used as a notification area for various types of information in many cases. Therefore, by positioning the second display area 81E2 in the upper portion of the display screen, it is possible to perform display conforming to ordinary use of a display device by displaying the progress of the regeneration in the second display area 81E2 while using the second display area 81E2 as a notification area for various types of information.

The first display area 81E1 is located in the center of the display screen of the display device 80. Since the center of the display screen is an area that the operator can most easily view, by using the area as the first display area 81E1 and displaying the warning there, it can be made easier for the operator to view the warning, so that an effect of calling attention of the operator with the warning can be enhanced.

In this embodiment, as illustrated in Fig. 10, when regeneration of the filter 72 is completed, the display device 80 displays a notification (information Q3) of completion of the regeneration of the filter 72. Thus, the operator can intuitively recognize completion of the filter regeneration by viewing the display device 80 and promptly drive the hydraulic excavator 1 to perform a work.

Moreover, when regeneration of the filter 72 is completed, the display device 80 deletes display of the progress of the filter regeneration that has been displayed by then in the second display area 81E2 (see Fig. 10). With display of the progress deleted, it is possible to reliably make the operator to recognize completion of the filter regeneration.

When regeneration of the filter 72 is interrupted, the display device 80 displays the interruption information Q4 related to interruption of the regeneration (see Fig. 11). Such display of the interruption information Q4 allows the operator to recognize that the filter regeneration has been interrupted for some reason.

The interruption information Q4 includes the notification information Q42 indicating that the regeneration has been interrupted. In this case, the operator can intuitively recognize that the filter regeneration has been interrupted by viewing the notification information Q42 displayed on the display device 80.

The display device 80 displays the notification information Q42 in the first display area 81E1 that is the display area for a warning associated with filter regeneration. Since the notification information Q42 is displayed in the same display area (first display area 81E1) as the warning, the operator can view the notification information Q42 to recognize interruption of the regeneration with the same level of importance as that of the warning associated with the regeneration.

The interruption information Q4 includes the abnormality information Q41 indicating that an abnormality has occurred in regeneration. In this case, the operator can intuitively recognize that an error has occurred in the filter regeneration by viewing the abnormality information Q41 displayed on the display device 80.

The display device 80 displays the abnormality information Q41 in the second display area 82E1 that is a display area for a progress of the filter regeneration. Since the abnormality information Q41 is displayed in the same display area (second display area 81E2) as the progress of the filter regeneration, the operator can recognize an abnormality in the filter regeneration by viewing the abnormality information Q41, instead of the progress of the filter regeneration.

Although description has been made using the hydraulic excavator 1 that is a construction machine as an example of a work machine, the work machine is not limited to the hydraulic excavator 1, but may be some other construction machine, such as a wheel loader or the like, and may be an agricultural machine, such as a combine harvester, a tractor, or the like. That is, the configuration including the display device 80 described in this embodiment can be applied to a construction device or an agricultural machine other than the hydraulic excavator 1.

An embodiment of the present invention has been described above, but the scope of the invention is not limited thereto, and the invention can be carried out in an extended or modified manner without departing from the gist of the invention.

### INDUSTRIAL APPLICABILITY

The present invention is applicable to a work machine, such as, for example, a construction machine, an agricultural machine, or the like.

### DESCRIPTION OF REFERENCE NUMERALS

1 Hydraulic excavator (work machine)
40 Engine
70 Exhaust gas treatment device
72 Filter
80 Display device
81E1 First display area
81E2 Second display area
90a6 Operation button (regeneration instruction operation unit)
90a7 Operation button (deletion instruction operation unit)

## Claims

1. A work machine comprising:
an engine;
an exhaust gas treatment device including a filter that catches particulate matter in exhaust gas discharged from the engine; and
a display device that simultaneously displays a progress of regeneration of the filter and a warning associated with the regeneration when the filter is regenerated by increase of temperature of the exhaust gas.

2. The work machine according to claim 1, further comprising:
a regeneration instruction operation unit that is operated by an operator and receives a regeneration instruction for the filter,
wherein the display device displays the progress and the warning when the filter is regenerated in accordance with an operation of the regeneration instruction operation unit.

3. The work machine according to claim 1 or 2, further comprising:
a deletion instruction operation unit that is operated by an operator and receives a deletion instruction to delete display of the warning,
wherein the display device deletes the display of the warning when the deletion instruction operation unit is operated.

4. The work machine according to claim 3,
wherein the display device displays the warning and, at the same time, displays additional information indicating that deletion of the display of the warning by an operation of the deletion instruction operation unit is possible.

5. The work machine according to any of claims 1 to 4,
wherein the display screen of the display device has a first display area in which the warning is displayed and a second display area that is located out of alignment with the first display area and in which the progress of the regeneration is displayed.

6. The work machine according to claim 5,
wherein the second display area is located above the first display area on the display screen.

7. The work machine according to claim 5 or 6,
wherein the first display area is located in center of the display screen.

8. The work machine according to any of claims 1 to 7,
wherein the display device displays a notification of completion of the regeneration of the filter when the regeneration of the filter is completed.

9. The work machine according to claim 8,
wherein the display device deletes the display of the progress of the regeneration when the regeneration of the filter is completed.

10. The work machine according to any of claims 1 to 9,
wherein the display device displays interruption information related to interruption of the regeneration when the regeneration of the filter is interrupted.

11. The work machine according to claim 10,
wherein the interruption information includes notification information indicating that the regeneration has been interrupted.

12. The work machine according to claim 11,
wherein the display device displays the notification information in the display area for the warning.

13. The work machine according to any of claims 10 to 12,
wherein the interruption information includes abnormality information indicating that an abnormality has occurred in the regeneration.

14. The work machine according to claim 13,
wherein the display device displays the abnormality information in the display area for the progress of the regeneration.
